(19) Europäisches Patentamt
European Patent Office
Office européen des brevets

(11) **EP 4 495 555 B1**

(12) **FASCICULE DE BREVET EUROPEEN**

(45) Date de publication et mention
de la délivrance du brevet:
**25.03.2026 Bulletin 2026/13**

(21) Numéro de dépôt: **24188959.1**

(22) Date de dépôt: **16.07.2024**

(51) Classification Internationale des Brevets (IPC):
*G01F 1/66* (2022.01)     *G01F 1/667* (2022.01)
*G01F 15/00* (2006.01)     *G01K 11/24* (2006.01)
*G01N 21/00* (2006.01)     *G01F 15/063* (2022.01)
*G01N 21/53* (2006.01)

(52) Classification Coopérative des Brevets (CPC):
**G01F 1/662; G01F 1/667; G01F 15/063;
G01N 21/53; G01N 21/532; G01N 21/534;**
G01N 2291/02809

(54) **QUALIMÉTRIE ÉVALUÉE PAR UN COMPTEUR DE FLUIDE**

QUALITOMETRIE, DIE VON EINEM FLÜSSIGKEITSZÄHLER AUSGEFALLEN WIRD

FLUID METER-BASED QUALITY MEASUREMENT

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **19.07.2023 FR 2307746**

(43) Date de publication de la demande:
**22.01.2025 Bulletin 2025/04**

(73) Titulaire: **SAGEMCOM ENERGY & TELECOM SAS
92270 Bois-Colombes (FR)**

(72) Inventeur: **TEBOULLE, Henri
92270 BOIS-COLOMBES (FR)**

(74) Mandataire: **Cabinet Boettcher
5, rue de Vienne
75008 Paris (FR)**

(56) Documents cités:
**WO-A1-2019/186366**    **DE-A1- 102007 007 812**
**KR-A- 20090 035 123**    **KR-B1- 102 406 733**
**US-A- 5 828 458**    **US-A1- 2012 185 184**
**US-B2- 10 495 509**

**Description**

L'invention concerne le domaine des compteurs de fluide communicants.

ARRIERE PLAN DE L'INVENTION

La distribution d'eau potable est assurée par des réseaux de distribution qui comprennent des canalisations et des dispositifs hydrauliques qui permettent d'optimiser la circulation d'eau depuis des réservoirs d'eau jusqu'aux installations des utilisateurs finaux via les canalisations.

Pour des raisons de sécurité sanitaire, il est essentiel de contrôler la qualité de l'eau potable.

La qualité de l'eau distribuée dépend bien sûr de la qualité de l'eau au moment de son captage, des traitements qu'elle subit, mais aussi des matériaux avec lesquels elle est en contact dans les réservoirs et lors de sa circulation dans le réseau de distribution. Des phénomènes de dépôt (biofilms, entartrage, oxydes métalliques, etc.) peuvent en effet se produire dans les réservoirs et les canalisations.

Les producteurs d'eau, les gestionnaires de réseau et les autorités sanitaires surveillent donc de très près et en permanence la qualité de l'eau potable distribuée.

Cette surveillance peut cependant manquer de précision du fait notamment de l'étendue des réseaux de distribution. Il est par exemple possible que la qualité de l'eau constatée chez des utilisateurs finaux localisés dans une zone particulière soit sensiblement moins bonne que la qualité évaluée en amont de ladite zone. Ceci peut résulter d'une dégradation localisée des canalisations, que les dispositifs de surveillance ne sont pas capables de détecter.

Il semble donc pertinent de tenter d'améliorer la précision de l'évaluation de la qualité de la fourniture d'eau en fonction de la localisation dans le réseau. Il serait préférable que le coût associé à cette amélioration ne soit pas trop important.

Le document KR 102 406 733 B1 décrit un compteur de fluide basé sur une mesure ultrasonique du débit juxtaposée à une mesure de la turbidité.

OBJET DE L'INVENTION

L'invention a pour objet une solution permettant, dans un réseau de distribution de fluide, d'améliorer la précision de l'évaluation de la qualité de la fourniture du fluide en fonction de la localisation, ladite solution présentant un coût limité.

RESUME DE L'INVENTION

En vue de la réalisation de ce but, on propose un compteur de fluide comprenant :

- un conduit dans lequel circule le fluide ;
- un émetteur agencé pour émettre un signal lumineux dans le conduit ;
- un récepteur agencé pour recevoir le signal lumineux après que celui-ci a parcouru un chemin prédéfini dans le conduit ;
- une unité de traitement agencée pour acquérir un signal électrique produit par le récepteur, et pour évaluer une turbidité du fluide à partir dudit signal électrique.

L'émetteur et le récepteur du signal lumineux sont donc utilisés pour évaluer la turbidité du fluide qui circule dans le conduit du compteur.

La turbidité est un paramètre pertinent pour mesurer la qualité de la fourniture du fluide. L'évaluation de la turbidité est réalisée par le compteur lui-même et donc au niveau de l'installation de l'utilisateur final. L'invention permet donc d'obtenir une mesure de la qualimétrie de la fourniture de fluide, qui est associée à une localisation très précise dans le réseau.

Le coût de l'évaluation de la turbidité est très réduit, car l'émetteur et le récepteur du signal lumineux sont des composants peu coûteux et simples à intégrer dans le compteur.

On propose de plus un compteur de fluide tel que précédemment décrit, dans lequel le fluide circule dans le conduit selon une première direction, et dans lequel le chemin prédéfini s'étend selon une deuxième direction perpendiculaire à la première direction.

On propose de plus un compteur de fluide tel que précédemment décrit, dans lequel le signal lumineux est un signal infrarouge.

On propose de plus un compteur de fluide tel que précédemment décrit, dans lequel l'émetteur est une diode électroluminescente et le récepteur est une photodiode.

On propose de plus un compteur de fluide tel que précédemment décrit, dans lequel le conduit comprend deux trous, et dans lequel l'émetteur et le récepteur s'étendent chacun au moins partiellement au travers de l'un des trous.

On propose de plus un compteur de fluide tel que précédemment décrit, dans lequel les deux trous sont situés sur le conduit à des positions diamétralement opposées.

On propose de plus un compteur de fluide tel que précédemment décrit, dans lequel le signal électrique est un courant électrique, et dans lequel la turbidité évaluée par l'unité de traitement est inversement proportionnelle audit courant électrique.

On propose de plus un compteur de fluide tel que précédemment décrit, comportant en outre un dispositif de mesure ultrasonique comprenant un transducteur amont et un transducteur aval et agencé pour mesurer un débit du fluide, l'émetteur et le récepteur étant positionnés en aval du transducteur amont et du transducteur aval.

On propose de plus un compteur de fluide tel que précédemment décrit, l'unité de traitement étant agencée pour évaluer des paramètres de qualimétrie représentatifs d'une qualité d'une fourniture du fluide, lesdits paramètres de qualimétrie comprenant la turbidité du fluide.

On propose de plus un compteur de fluide tel que précédemment décrit, les paramètres de qualimétrie comprenant en outre une température du fluide.

On propose de plus un compteur de fluide tel que précédemment décrit, l'unité de traitement étant agencée pour évaluer une vitesse du son dans le fluide en utilisant le dispositif de mesure ultrasonique, puis pour évaluer la température du fluide à partir de la vitesse du son.

On propose de plus un compteur de fluide tel que précédemment décrit, dans lequel le compteur comporte au moins un capteur de pression, les paramètres de qualimétrie comprenant en outre une pression mesurée par ledit capteur de pression.

On propose de plus un compteur de fluide tel que précédemment décrit, dans lequel le compteur comporte un capteur de pression amont, positionné d'un côté d'une extrémité amont du conduit, et un capteur de pression aval, positionné d'un côté d'une extrémité aval du conduit, les paramètres de qualimétrie comprenant en outre une valeur de pression représentative d'une différence de pression entre une pression amont mesurée par le capteur de pression amont et une pression aval mesurée par le capteur de pression aval.

On propose de plus un compteur de fluide tel que précédemment décrit, comprenant en outre un module de communication, l'unité de traitement étant agencée pour recevoir via le module de communication une requête émise par un système extérieur au compteur de fluide, et pour, en réponse à ladite requête, transmettre les paramètres de qualimétrie audit système.

On propose de plus un procédé de mesure, mis en œuvre dans l'unité de traitement d'un compteur de fluide tel que précédemment décrit, comprenant les étapes de :

- piloter l'émetteur pour que celui-ci émette le signal lumineux dans le conduit ;
- acquérir le signal électrique produit par le récepteur ;
- évaluer une turbidité du fluide à partir dudit signal électrique.

On propose de plus un programme d'ordinateur comprenant des instructions qui conduisent l'unité de traitement du compteur de fluide tel que précédemment décrit à exécuter les étapes du procédé de mesure tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un compteur d'eau ;
[Fig. 2] la figure 2 représente une vue en coupe simplifiée et partielle du conduit du compteur, selon un plan passant par un axe longitudinal du conduit.

DESCRIPTION DETAILLEE DE L'INVENTION

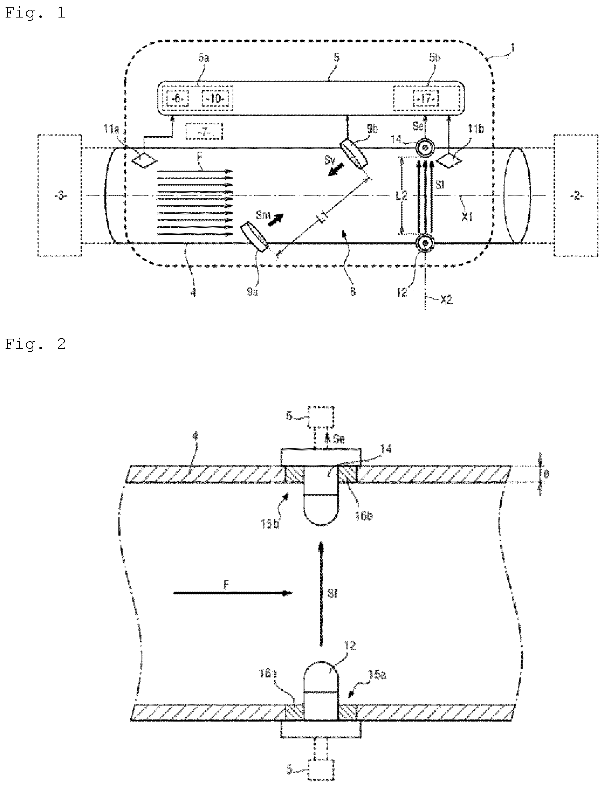

En référence à la figure 1, le compteur d'eau 1 est utilisé pour mesurer la consommation d'eau de l'installation 2 d'un utilisateur final. L'eau est fournie à l'installation 2 par un réseau de distribution d'eau 3.

Le compteur 1 comporte un conduit 4 dans lequel circule l'eau fournie par le réseau 3 à l'installation 2. L'eau circule dans le conduit 4 d'amont en aval, comme cela est indiqué par le sens des flèches F. Ici, par « en amont », on entend du côté du réseau 3, et par « en aval », on entend du côté de l'installation 2.

Le compteur 1 comporte une unité de traitement 5 (électronique et logicielle). L'unité de traitement 5 comprend au moins un composant de traitement 5a, qui est par exemple un processeur « généraliste », un processeur spécialisé dans le traitement du signal (ou DSP, pour *Digital Signal Processor),* un microcontrôleur, ou bien un circuit logique programmable tel qu'un FPGA (pour *Field Programmable Gate Arrays)* ou un ASIC (pour *Application Specific Integrated Circuit).*

L'unité de traitement 5 comprend aussi une ou des mémoires 5b, reliées à ou intégrées dans le composant de traitement 5a. Au moins l'une de ces mémoires 5b forme un support d'enregistrement lisible par ordinateur, sur lequel est enregistré au moins un programme d'ordinateur comprenant des instructions qui conduisent le composant de traitement 5a à exécuter au moins certaines des étapes du procédé de mesure qui sera décrit plus bas.

Le composant de traitement 5a est ici le microcontrôleur métrologie du compteur 1. Le microcontrôleur 5a intègre un convertisseur analogique numérique (CAN) 6.

Le compteur 1 comprend de plus un module de communication 7. Le module de communication 7 met par exemple en œuvre une liaison radio cellulaire selon le protocole LTE-Cat M1 ou le protocole NB-IoT.

Le compteur 1 comprend aussi un dispositif de mesure ultrasonique 8. Le dispositif de mesure ultrasonique 8 est utilisé pour mesurer le débit d'eau fourni à l'installation 2 par le réseau 3.

Le dispositif de mesure ultrasonique 8 comporte un transducteur amont 9a et un transducteur aval 9b. Le dispositif de mesure ultrasonique 8 comporte aussi un module de calcul 10 (logiciel) qui est implémenté ici dans le microcontrôleur 5a de l'unité de traitement 5. Le module de calcul 10 réalise les évaluations du débit.

Le transducteur amont 9a et le transducteur aval 9b sont avantageusement (mais pas nécessairement) appairés. Le transducteur amont 9a et le transducteur aval 9b sont ici des transducteurs piézoélectriques.

Chaque transducteur 9a, 9b joue successivement le rôle d'un émetteur et d'un récepteur de signaux ultrasonores.

L'unité de traitement 5 génère un signal électrique d'excitation, et fournit à l'émetteur le signal électrique d'excitation. L'émetteur génère alors un signal ultrasonore. Le récepteur reçoit le signal ultrasonore après que celui-ci a parcouru dans l'eau un premier chemin prédéfini.

Le premier chemin prédéfini est ici un chemin direct qui est ici incliné par rapport à un axe longitudinal X1 du conduit 4 (le premier chemin prédéfini pourrait aussi être parallèle audit axe X1). Le premier chemin prédéfini pourrait aussi être un chemin indirect : les signaux ultrasonores seraient alors réfléchis contre la paroi interne du conduit 4 (éventuellement contre des réflecteurs eux-mêmes situés sur la paroi interne).

Le premier chemin prédéfini a une première longueur L1, qui est connue très précisément.

Le transducteur amont 9a et le transducteur aval 9b sont notamment connectés au CAN 6 qui numérise les signaux produits par lesdits transducteurs.

Ainsi, l'unité de traitement 5 applique tout d'abord le signal électrique d'excitation aux bornes du transducteur amont 9a de sorte que celui-ci génère dans le conduit 4 un signal ultrasonore amont Sm. L'unité de traitement 5 acquiert un signal électrique aval produit par le transducteur aval 9b lorsque celui-ci reçoit le signal ultrasonore amont Sm.

Puis, l'unité de traitement 5 applique le signal électrique d'excitation aux bornes du transducteur aval 9b de sorte que celui-ci génère dans le conduit 4 un signal ultrasonore aval Sv. L'unité de traitement 5 acquiert un signal électrique amont produit par le transducteur amont 9a lorsque celui-ci reçoit le signal ultrasonore aval Sv.

Le module de calcul 10 analyse le signal électrique aval et le signal électrique amont pour évaluer une vitesse de l'eau dans le conduit 4, puis évalue, à partir de la vitesse de l'eau, le débit de l'eau dans le conduit 4.

Le compteur 1 comporte de plus au moins un capteur de pression, en l'occurrence deux capteurs de pression : un capteur de pression amont 11a, qui est positionné du côté de l'extrémité amont du conduit 4, et un capteur de pression aval 11b, qui est positionné du côté de l'extrémité aval du conduit 4.

Le capteur de pression amont 11a et le capteur de pression aval 11b sont connectés à l'unité de traitement 5. Le capteur de pression amont 11a et le capteur de pression aval 11b sont notamment connectés au CAN 6 qui numérise les mesures produites par lesdits capteurs.

Le compteur 1 comporte de plus un émetteur 12 agencé pour émettre un signal lumineux Sl dans le conduit 4, et un récepteur 14 agencé pour recevoir le signal lumineux Sl après que celui-ci a parcouru un deuxième chemin prédéfini dans le conduit 4 (et donc dans l'eau).

Le deuxième chemin prédéfini s'étend selon une deuxième direction X2 perpendiculaire à une première direction (axe X1) selon laquelle circule l'eau.

Le deuxième chemin prédéfini a une deuxième longueur L2, qui est connue très précisément.

Le signal lumineux Sl est ici un signal infrarouge. La longueur d'onde du signal lumineux Sl est par exemple égale à 860nm.

L'émetteur 12 est ici une diode électroluminescente (LED) et le récepteur 14 est une photodiode.

En référence à la figure 2, un premier trou 15a et un deuxième trou 15b, traversants, sont formés dans l'épaisseur e de la paroi du conduit 4. Le premier trou 15a et le deuxième trou 15b sont situés sur le conduit 4 à des positions diamétralement opposées.

La LED 12 et la photodiode 14 s'étendent chacune au moins partiellement au travers de l'un des trous 15a, 15b.

La LED 12 est ici encapsulée dans un boîtier de forme cylindrique à bout arrondi. Le bout arrondi comprend ici une lentille. Le boîtier est transparent ou translucide à la lumière infrarouge. Le boîtier est fabriqué ici en résine epoxy.

La LED 12 est insérée dans le premier trou 15a de sorte que l'extrémité de la LED 12, correspondant au bout arrondi, saille à l'intérieur du conduit 4.

L'étanchéité est assurée par un premier joint 16a qui s'étend autour du boîtier de la LED 12 en étant positionné entre le boîtier de la LED 12 et la paroi du conduit 4 au niveau du premier trou 15a.

La photodiode 14 est elle aussi encapsulée dans un boîtier de forme cylindrique à bout arrondi. Le bout arrondi comprend ici une lentille.

La photodiode 14 est insérée dans le deuxième trou 15b en face de la LED 12 de sorte que l'extrémité de la photodiode 14, correspondant au bout arrondi, saille à l'intérieur du conduit 4. L'étanchéité est assurée par un deuxième joint 16b qui s'étend autour du boîtier de la photodiode 14 en étant positionné entre le boîtier de la photodiode 14 et la paroi du conduit 4 au niveau du deuxième trou 15b.

La LED 12 et la photodiode 14 sont connectées à l'unité de traitement 5.

L'unité de traitement 5 peut activer la LED 12 pour que celle-ci émette le signal lumineux SI, et acquérir le signal électrique Se produit par la photodiode 14 lorsque celle-ci reçoit le signal lumineux SI.

La photodiode 14 est connectée au CAN 6 du microcontrôleur 5 qui numérise le signal électrique Se produit par la photodiode 14.

On note que la LED 12 et la photodiode 14 sont ici positionnées en aval du transducteur amont 9a et du transducteur aval 9b du dispositif de mesure ultrasonique 8. Cela permet d'assurer que ces composants ne perturbent pas la mesure métrologique du débit de l'eau réalisée par le dispositif de mesure ultrasonique 8.

L'unité de traitement 5 évalue des paramètres de qualimétrie représentatifs de la qualité de la fourniture de l'eau.

Les paramètres de qualimétrie comprennent tout d'abord la turbidité de l'eau.

L'unité de traitement 5 pilote donc la LED 12 pour que celle-ci émette le signal lumineux SI dans le conduit 4, et acquiert le signal électrique Se produit par la photodiode 14. L'unité de traitement 5 est donc capable de déterminer la quantité de lumière reçue par la photodiode 14. L'unité de traitement 5 évalue la turbidité de l'eau à partir dudit signal électrique Se.

Le signal électrique Se est un courant électrique. La turbidité évaluée par l'unité de traitement 5 est inversement proportionnelle audit courant électrique.

La turbidité est exprimée en NTU (pour *Nephelometric Turbidity Unit),* qui est une unité qui représente un ordre de grandeur en mg/L de MES (Matière En Suspension).

Une calibration du système comprenant la LED 12 et la photodiode 14 intégrées dans le compteur 1, est réalisée en usine.

Les mesures du courant sont par exemple réalisées à une fréquence d'une mesure par seconde.

Pour réaliser une mesure de turbidité au temps T, l'unité de traitement 5 réalise ici un nombre prédéterminé de mesures du signal électrique Se produit par la photodiode 14 (la LED 12 étant activée). Le nombre prédéterminé est par exemple égal à 10, soit par exemple 5 mesures avant le temps T et 5 mesures après le temps T. L'unité de traitement 5 calcule la moyenne de ces 10 mesures de courant pour obtenir une valeur de courant moyennée. L'unité de traitement 5 produit alors une mesure de turbidité à partir de la valeur de courant moyennée.

Les paramètres de qualimétrie comprennent de plus la température de l'eau.

L'unité de traitement 5 évalue une vitesse du son (ou célérité du son) dans l'eau en utilisant le dispositif de mesure ultrasonique 8, puis évalue la température de l'eau à partir de la vitesse du son.

Le dispositif de mesure ultrasonique 8 permet de mesurer la vitesse c du son, de la manière suivante.

Le module de calcul 10 détermine tout d'abord la somme des temps de vol *(Time of Flight,* où *ToF)* des signaux ultrasonores entre les deux transducteurs 9a, 9b : *sTOF.*

La somme des temps de vol *sTOF* est donc égale à la somme :

- du temps mis par le signal ultrasonore amont Sm pour parcourir le premier chemin prédéfini entre le transducteur amont 9a et le transducteur aval 9b, et

  - du temps mis par le signal ultrasonore aval Sv pour parcourir le premier chemin prédéfini entre le transducteur aval 9b et le transducteur amont 9a.

L'unité de traitement 5 évalue alors la vitesse du son en utilisant la formule suivante :

$$c = \frac{2 \times L1}{sTOF},$$

où $L1$ est la première longueur du premier chemin prédéfini.

Puis, l'unité de traitement 5 utilise la formule suivante pour évaluer la température de l'eau à partir de la vitesse du son :

$c$ = 1.40238677 * 10^3 + 5.03798765 * $T$ - 5.80980033 * 10^(-2) $T$^2 + 3.34296650 * 10^(-4) $T$^3 - 1.47936902 * 10^(-6) $T$^4 + 3.14893508 * 10^(-9) $T$^5

Cette équation admet une solution positive qui correspond à la température de l'eau $T$.

Cette manière d'évaluer la température de l'eau est très avantageuse, puisqu'elle ne nécessite pas d'intégrer dans le compteur 1 de capteur de température. La température de l'eau est évaluée en utilisant les transducteurs 9a, 9b qui sont présents dans le compteur 1 pour réaliser les mesures de métrologie. On obtient donc sans coûts additionnels l'évaluation d'un paramètre très pertinent pour évaluer la qualité de la fourniture de l'eau.

Les paramètres de qualimétrie comprennent en outre une pression mesurée par l'un des capteurs de pression de l'unité de traitement 5.

Il s'agit en l'occurrence de la pression amont $P_M$ mesurée par le capteur de pression amont 11a.

Les paramètres de qualimétrie doivent vérifier des conditions prédéfinies dans le cas d'un compteur d'eau pour être conformes à la qualité de fourniture attendue. Les conditions prédéfinies sont les suivantes :

- pression amont $P_M$ < 16 Bar;
- Température de l'eau T :

  o Comprise entre 0.1°C et 30°C (pour un compteur d'eau froide) ;
  o Comprise entre 50°C et 70°C (pour un compteur d'eau chaude) ;

-

$$\text{Turbidité} \leq 5\,NTU.$$

Les paramètres de qualimétrie comprennent en outre une valeur de pression représentative d'une différence de pression entre une pression amont mesurée par le capteur de pression amont 11a et une pression aval mesurée par le capteur de pression aval 11b.

La valeur de pression est ici égale à :

$$\Delta P = P_M - P_V,$$

où $P_M$ est la pression amont et $P_V$ est la pression aval.

La valeur de pression $\Delta P$ est la perte de charge due au compteur 1 lui-même. Il ne s'agit donc pas à proprement parler d'un paramètre de qualimétrie, susceptible d'évaluer la qualité de la fourniture d'eau, mais plutôt d'une contrainte que doit respecter le compteur 1 pour être conforme à ses spécifications techniques et fonctionnelles. La canalisation du flux dans le compteur 1 entraîne nécessairement une légère perte de charge, mais celle-ci doit être limitée.

La perte de charge $\Delta P$ doit vérifier la condition prédéfinie suivante :

$$\Delta P < 0.63\ \text{Bar.}$$

Les valeurs numériques utilisées pour les conditions prédéfinies sont programmables et peuvent être modifiées en fonction des exigences réglementaires.

L'unité de traitement 5 crée un tableau journalier 17 qui contient les mesures de qualimétrie produites périodiquement. La période est par exemple égale à un quart d'heure (soit 96 mesures par jour).

Le tableau 17 est stocké dans l'une des mémoires 5b. Un exemple de tableau 17 est fourni en annexe.

Le tableau 17 comporte donc 96 lignes de mesures réalisées tous les quarts d'heure (par exemple de 00h07'30" à 23h52'30").

A chaque quart d'heure (échantillon) sont associées les mesures de la pression amont, de la perte de charge, de la température et de la turbidité.

L'unité de traitement 5 stocke ici ces valeurs sur une semaine (donc sept tableaux journaliers 17, identiques à celui fourni en annexe, incluant le tableau de la journée en cours).

L'unité de traitement 5 peut transmettre ces données à un système extérieur au compteur 1 en utilisant le module de communication 7. L'unité de traitement 5 reçoit par exemple, via le module de communication 7, une requête émise par ledit système. L'unité de traitement 5, en réponse à ladite requête, transmet les paramètres de qualimétrie au système extérieur via le module de communication 7.

Le système extérieur est par exemple le SI (pour Système d'Information) du distributeur d'eau et/ou du gestionnaire du réseau.

Le SI produit par exemple une requête DLMS dédiée, à laquelle répond le compteur 1 en envoyant le tableau 17.

Le compteur 1 peut aussi émettre un message d'alarme, à destination du distributeur d'eau, du gestionnaire du réseau, voire même de l'utilisateur final, lorsque la qualité de la fourniture d'eau n'est pas satisfaisante (c'est-à-dire qu'elle ne remplit pas les conditions prédéfinies évoquées plus tôt).

L'évaluation de la qualimétrie de la fourniture d'eau par le compteur permet d'avoir une preuve juridique que la qualité de la fourniture chez l'utilisateur final est celle attendue en matière de température de l'eau, de pression et de turbidité.

On note enfin que, en ce qui concerne la distribution d'électricité, la qualimétrie est définie dans la norme NF EN 61000-4-30. Il n'existe pas à ce jour de standard relatif aux compteurs de fluide, et personne n'a eu l'idée de définir la qualité de fourniture dans le cas de l'eau typiquement. Il semble pourtant extrêmement pertinent de le faire. C'est l'un des buts de la présente invention.

Bien entendu, l'invention n'est pas limitée au mode de réalisation décrit mais englobe toute variante entrant dans le champ de l'invention tel que défini par les revendications.

Le compteur n'est pas nécessairement un compteur d'eau, il peut s'agir d'un compteur d'un fluide quelconque : gaz, pétrole, etc.

La LED et la photodiode ne s'étendent pas nécessairement au travers de trous formés dans l'épaisseur du conduit. La LED et la photodiode pourraient être positionnées à l'extérieur du conduit et en regard de ces trous, qui seraient par exemple fermés par des surfaces transparentes ou translucides (vitre par exemple). La LED et la photodiode pourraient aussi être fixées à la paroi interne du conduit, ou bien intégrées dans un dispositif de mesure lui-même intégré dans le conduit.

L'émetteur et le récepteur du signal lumineux ne sont pas nécessairement une LED et une photodiode. Il pourrait s'agir d'une diode laser et d'un phototransistor par exemple.

Le signal lumineux n'est pas nécessairement un signal infrarouge, il pourrait appartenir au domaine du visible par exemple.

**Annexe**

| Types de mesures →<br>Echantillons ↓ | Pression Amont (Bar) | ΔP (Bar) Perte de charge | Température (°C) | Turbidité (NTU) |
|---|---|---|---|---|
| 1 | XXX | XXX | YYY | zzz |
| 2 | XXX | XXX | YYY | zzz |
| 3 | XXX | XXX | YYY | zzz |
| ... | ... | ... | ... | ... |
| 95 | XXX | XXX | YYY | zzz |
| 96 | XXX | XXX | YYY | zzz |

**Revendications**

1. Compteur de fluide (1) comprenant :

   - un conduit (4) dans lequel circule le fluide ;
   - un dispositif de mesure ultrasonique (8) agencé pour mesurer un débit du fluide dans ledit conduit, et comprenant un transducteur amont (9a) agencé pour générer dans le conduit (4) un signal ultrasonore amont (Sm), et un transducteur aval (9b) agencé pour générer dans le conduit (4) un signal ultrasonore aval (Sv) ;
   **caractérisé par**
   - un émetteur (12) agencé pour émettre un signal lumineux (SI) dans ledit conduit ;
   - un récepteur (14) agencé pour recevoir le signal lumineux après que celui-ci a parcouru un chemin prédéfini dans ledit conduit, l'émetteur (12) et le récepteur (14) étant positionnés en aval du transducteur amont et du transducteur aval du dispositif de mesure ultrasonique (8) ;
- une unité de traitement (5) agencée pour acquérir un signal électrique (Se) produit par le récepteur, et pour évaluer une turbidité du fluide à partir dudit signal électrique.

2. Compteur de fluide selon la revendication 1, dans lequel le fluide circule dans le conduit selon une première direction (X1), et dans lequel le chemin prédéfini s'étend selon une deuxième direction (X2) perpendiculaire à la première direction.

3. Compteur de fluide selon l'une des revendications précédentes, dans lequel le signal lumineux (SI) est un signal infrarouge.

4. Compteur de fluide selon l'une des revendications précédentes, dans lequel l'émetteur est une diode électroluminescente et le récepteur est une photodiode.

5. Compteur de fluide selon l'une des revendications précédentes, dans lequel le conduit comprend deux trous (15a, 15b), et dans lequel l'émetteur et le récepteur s'étendent chacun au moins partiellement au travers de l'un des trous.

6. Compteur de fluide selon la revendication 5, dans lequel les deux trous (15a, 15b) sont situés sur le conduit à des positions diamétralement opposées.

7. Compteur de fluide selon l'une des revendications précédentes, dans lequel le signal électrique (Se) est un courant électrique, et dans lequel la turbidité évaluée par l'unité de traitement (5) est inversement proportionnelle audit courant électrique.

8. Compteur de fluide selon l'une des revendications précédentes, l'unité de traitement (5) étant agencée pour évaluer des paramètres de qualimétrie représentatifs d'une qualité d'une fourniture du fluide, lesdits paramètres de qualimétrie comprenant la turbidité du fluide.

9. Compteur de fluide selon la revendication 8, les paramètres de qualimétrie comprenant en outre une température du fluide.

10. Compteur de fluide selon les revendications 7 et 9, l'unité de traitement (5) étant agencée pour évaluer une vitesse du son dans le fluide en utilisant le dispositif de mesure ultrasonique (8), puis pour évaluer la température du fluide à partir de la vitesse du son.

11. Compteur de fluide selon l'une des revendications 8 à 10, dans lequel le compteur (1) comporte au moins un capteur de pression (11a, 11b), les paramètres de qualimétrie comprenant en outre une pression mesurée par ledit capteur de pression.

12. Compteur de fluide selon la revendication 11, dans lequel le compteur (1) comporte un capteur de pression amont (11a), positionné d'un côté d'une extrémité amont du conduit (4), et un capteur de pression aval (11b), positionné d'un côté d'une extrémité aval du conduit, les paramètres de qualimétrie comprenant en outre une valeur de pression représentative d'une différence de pression entre une pression amont mesurée par le capteur de pression amont et une pression aval mesurée par le capteur de pression aval.

13. Compteur de fluide selon l'une des revendications 8 à 12, comprenant en outre un module de communication (7), l'unité de traitement (5) étant agencée pour recevoir via le module de communication une requête émise par un système extérieur au compteur de fluide, et pour, en réponse à ladite requête, transmettre les paramètres de qualimétrie audit système.

14. Procédé de mesure, mis en œuvre dans l'unité de traitement (5) d'un compteur de fluide (1) selon l'une des revendications précédentes, comprenant les étapes de :

- piloter l'émetteur (12) pour que celui-ci émette le signal lumineux (SI) dans le conduit (4) ;
- acquérir le signal électrique (Se) produit par le récepteur (14) ;
- évaluer une turbidité du fluide à partir dudit signal électrique.

**15.** Programme d'ordinateur comprenant des instructions qui conduisent l'unité de traitement (5) du compteur de fluide (1) selon l'une des revendications précédentes à exécuter les étapes du procédé de mesure selon la revendication 14.

**16.** Support d'enregistrement lisible par ordinateur, sur lequel est enregistré le programme d'ordinateur selon la revendication 15.

**Patentansprüche**

**1.** Fluidzähler (1), umfassend:

- eine Leitung (4), in welcher das Fluid fließt;
- eine Ultraschall-Messvorrichtung (8), welche dafür ausgelegt ist, einen Fluiddurchfluss in der Leitung zu messen, und welche umfasst: einen Upstream-Wandler (9a), der dafür ausgelegt ist, in der Leitung (4) ein Upstream-Ultraschallsignal (Sm) zu erzeugen, und einen Downstream-Wandler (9b), der dafür ausgelegt ist, in der Leitung (4) ein Downstream-Ultraschallsignal (Sv) zu erzeugen;
**gekennzeichnet durch**
- einen Sender (12), der dafür ausgelegt ist, ein Lichtsignal (SI) in die Leitung hinein auszusenden;
- einen Empfänger (14), der dafür ausgelegt ist, das Lichtsignal zu empfangen, nachdem dieses einen vorgegebenen Weg in der Leitung zurückgelegt hat, wobei der Sender (12) und der Empfänger (14) dem Upstream-Wandler und dem Downstream-Wandler der Ultraschall-Messvorrichtung (8) nachgeordnet sind;
- eine Verarbeitungseinheit (5), die dafür ausgelegt ist, ein von dem Empfänger erzeugtes elektrisches Signal (Se) zu erfassen und anhand des elektrischen Signals eine Trübung des Fluids zu beurteilen.

**2.** Fluidzähler nach Anspruch 1, wobei das Fluid in der Leitung gemäß einer ersten Richtung (X1) fließt und wobei sich der vorgegebene Weg gemäß einer senkrecht zu der ersten Richtung verlaufenden zweiten Richtung (X2) erstreckt.

**3.** Fluidzähler nach einem der vorhergehenden Ansprüche, wobei es sich bei dem Lichtsignal (SI) um ein Infrarotsignal handelt.

**4.** Fluidzähler nach einem der vorhergehenden Ansprüche, wobei es sich bei dem Sender um eine Leuchtdiode und bei dem Empfänger um eine Fotodiode handelt.

**5.** Fluidzähler nach einem der vorhergehenden Ansprüche, wobei die Leitung zwei Öffnungen (15a, 15b) umfasst, und wobei sich der Sender und der Empfänger jeweils zumindest teilweise durch eine der Öffnungen hindurch erstrecken.

**6.** Fluidzähler nach Anspruch 5, wobei sich die beiden Öffnungen (15a, 15b) in der Leitung an einander diametral entgegengesetzten Stellen befinden.

**7.** Fluidzähler nach einem der vorhergehenden Ansprüche, wobei es sich bei dem elektrischen Signal (Se) um einen elektrischen Strom handelt, und wobei sich die von der Verarbeitungseinheit (5) bewertete Trübung zu diesem elektrischen Strom invers proportional verhält.

**8.** Fluidzähler nach einem der vorhergehenden Ansprüche, wobei die Verarbeitungseinheit (5) dafür ausgelegt ist, Qualitätsmessparameter auszuwerten, die eine Qualität einer Fluidversorgung darstellen, wobei die Qualitätsmessparameter die Trübung des Fluids umfassen.

**9.** Fluidzähler nach Anspruch 8, wobei die Qualitätsmessparameter ferner eine Temperatur des Fluids umfassen.

**10.** Fluidzähler nach den Ansprüchen 7 und 9, wobei die Verarbeitungseinheit (5) dafür ausgelegt ist, mithilfe der Ultraschall-Messvorrichtung (8) eine Geschwindigkeit des Schalls in dem Fluid auszuwerten, und anschließend anhand dieser Schallgeschwindigkeit die Fluidtemperatur zu beurteilen.

**11.** Fluidzähler nach einem der Ansprüche 8 bis 10, wobei der Zähler (1) zumindest einen Drucksensor (11a, 11b) enthält, wobei die Qualitätsmessparameter ferner einen von dem Drucksensor gemessenen Druck umfassen.

**12.** Fluidzähler nach Anspruch 11, wobei der Zähler (1) enthält: einen vorgeordneten Drucksensor (11a), der auf einer Seite eines stromauf angeordneten Endes der Leitung (4) positioniert ist, und einen nachgeordneten Drucksensor (11b), der auf einer Seite eines stromab angeordneten Endes der Leitung positioniert ist, wobei die Qualitätsmessparameter ferner einen Druckwert umfassen, der eine Druckdifferenz zwischen einem von dem vorgeordneten Drucksensor gemessenen Eingangsdruck und einem von dem nachgeordneten Drucksensor gemessenen Ausgangsdruck darstellt.

**13.** Fluidzähler nach einem der Ansprüche 8 bis 12, ferner umfassend ein Kommunikationsmodul (7), wobei die Verarbeitungseinheit (5) dafür ausgelegt ist, über das Kommunikationsmodul eine von einem außerhalb des Fluidzählers angeordneten System gesendete Anfrage zu empfangen, und in Reaktion auf diese Anfrage die Qualitätsmessparameter an das besagte System zu übermitteln.

**14.** Messverfahren, welches in der Verarbeitungseinheit (5) eines Fluidzählers (1) nach einem der vorhergehenden Ansprüche ausgeführt wird und die Schritte umfasst, dass:

- der Sender (12) angesteuert wird, damit von diesem das Lichtsignal (SI) in die Leitung (4) hinein ausgesendet wird;
- das von dem Empfänger (14) erzeugte elektrische Signal (Se) erfasst wird;
- anhand des elektrischen Signals eine Trübung des Fluids beurteilt wird.

**15.** Computerprogramm, das Befehle umfasst, welche die Verarbeitungseinheit (5) des Fluidzählers (1) nach einem der vorhergehenden Ansprüche dazu veranlassen, die Schritte des Messverfahrens nach Anspruch 14 auszuführen.

**16.** Computerlesbares Speichermedium, auf welchem das Computerprogramm nach Anspruch 15 abgespeichert ist.

**Claims**

**1.** Fluid meter (1) comprising:

- a conduit (4) in which the fluid circulates;
- an ultrasonic measuring device (8) arranged to measure a flow rate of the fluid in said conduit, and comprising an upstream transducer (9a) arranged to generate an upstream ultrasonic signal (Sm) in the conduit (4), and a downstream transducer (9b) arranged to generate a downstream ultrasonic signal (Sv) in the conduit (4);

**characterized in that** the fluid meter comprises:

- an emitter (12) arranged to emit a light signal (SI) into said conduit;
- a receiver (14) arranged to receive the light signal after this has travelled a predefined path in said conduit, the emitter (12) and the receiver (14) being positioned downstream of the upstream transducer and of the downstream transducer of the ultrasonic measuring device (8);
- a processing unit (5) arranged to acquire an electrical signal (Se) produced by the receiver, and to evaluate a turbidity of the fluid from said electrical signal.

**2.** Fluid meter according to claim 1, wherein the fluid circulates in the conduit in a first direction (X1), and wherein the predefined path extends in a second direction (X2), perpendicular to the first direction.

**3.** Fluid meter according to one of the preceding claims, wherein the light signal (SI) is an infrared signal.

**4.** Fluid meter according to one of the preceding claims, wherein the emitter is a light-emitting diode and the receiver is a photodiode.

**5.** Fluid meter according to one of the preceding claims, wherein the conduit comprises two holes (15a, 15b), and wherein the emitter and the receiver each extend at least partially through one of the holes.

**6.** Fluid meter according to claim 5, wherein the two holes (15a, 15b) are located on the conduit at diametrically opposite positions.

**7.** Fluid meter according to one of the preceding claims, wherein the electrical signal (Se) is an electric current, and wherein the turbidity evaluated by the processing unit (5) is inversely proportional to said electric current.

8. Fluid meter according to one of the preceding claims, the processing unit (5) being arranged to evaluate qualimetry parameters representative of a quality of a fluid supply, said qualimetry parameters comprising the turbidity of the fluid.

9. Fluid meter according to claim 8, the qualimetry parameters further comprising a temperature of the fluid.

10. Fluid meter according to claims 7 and 9, the processing unit (5) being arranged to evaluate a speed of sound in the fluid by using the ultrasonic measuring device (8), then to evaluate the temperature of the fluid from the speed of sound.

11. Fluid meter according to one of claims 8 to 10, wherein the meter (1) comprises at least one pressure sensor (11a, 11b), the qualimetry parameters further comprising a pressure measured by said pressure sensor.

12. Fluid meter according to claim 11, wherein the meter (1) comprises an upstream pressure sensor (11a), positioned on a side of an upstream end of the conduit (4), and a downstream pressure sensor (11b), positioned on a side of a downstream end of the conduit, the qualimetry parameters further comprising a pressure value representative of a pressure difference between an upstream pressure measured by the upstream pressure sensor and a downstream pressure measured by the downstream pressure sensor.

13. Fluid meter according to one of claims 8 to 12, further comprising a communication module (7), the processing unit (5) being arranged to receive, via the communication module, a request emitted by a system external to the fluid meter, and to, in response to said request, transmit the qualimetry parameters to said system.

14. Measuring method, implemented in the processing unit (5) of a fluid meter (1) according to one of the preceding claims, comprising the steps of:

   - controlling the emitter (12) such that it emits the light signal (Sl) into the conduit (4);
   - acquiring the electrical signal (Se) produced by the receiver (14) ;
   - evaluating a turbidity of the fluid from said electrical signal.

15. Computer program comprising instructions which make the processing unit (5) of the fluid meter (1) according to one of the preceding claims execute the steps of the measuring method according to claim 14.

16. Computer-readable storage medium, on which the computer program according to claim 15 is stored.

Fig. 1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 102406733 B1